# EUROPEAN PATENT APPLICATION

(11) **EP 4 191 938 A1**
(43) Date of publication of application: **07.06.2023**
(21) Application number: 21306698.8
(22) Date of filing: 03.12.2021
(51) Int. Cl.: H04L 9/06, H04L 9/32

(54) **NON-REPUDIABLE ENDORSEMENT OF A PRIVATE ATTESTATION**

(71) Applicant: Thales Dis France SAS, 92190 Meudon (FR)
(72) Inventor: FAHER, Mourad, 13705 LA CIOTAT (FR); DEBOIS, Georges, 13705 LA CIOTAT (FR); ROMANE, Frédéric, 13705 LA CIOTAT (FR)
(74) Representative: Grevin, Emmanuel

(57) **Abstract**

Provided is a method (200) for non-repudiable endorsement of a private attestation (111). The method includes receiving an attestation from a Private Attribute Provider (110) responsive to a request from a user declaring the attestation, securely binding pivotal attributes in the Attestation selected by the user once authenticated to an Issuing Authority (120), and securely binding the user to the attestation by way of their connected device (100). The method produces an endorsed attestation (400) that includes signed server proof (360). This is provided by the user through their connected device to a service provider for receiving a service (151) otherwise requiring third party trusted proof. Other embodiments are disclosed.

## Description

### TECHNICAL FIELD

The present invention relates to the technical field of electronic authentication and attestation. One or more embodiments of the invention relate generally to the field of cryptographic authentication. More particularly, embodiments relate to a method and system for proof of attestation.

It relates to a new and developed way to verify and attest the authenticity of personal documents issued by an attribute provider to an independent service provider where there is no chain of trust there between.

The invention envisages a means of allaying trust concerns regarding authenticity of documents privately attested to. Advantageously, the invention provides a technical mechanism for endorsement of attestations to users wanting to enhance the trust in their private attestations.

### BACKGROUND

Authentication is the security process of verifying a user's identity with the system that authorizes the individual to access the system, for example, a sign-on process. Authentication is important because it assigns responsibility to the user for entries he or she creates, modifies, or views. Authorship is attributing the origination or creation of a particular unit of information to a specific individual or entity acting at a particular time.

Attestation is the act of witnessing the signing of a formal document and then also signing it to verify that it was properly signed by those bound by its contents. Attestation is a legal acknowledgment of the authenticity of a document and a verification that proper processes were followed. Attestation can also be the act of applying an electronic signature to the content, showing authorship and legal responsibility for a particular unit of information. An electronic signature is a generic, technology-neutral term for the various ways that an electronic record can be signed, and attested.

The problem: Digital attestations (e.g. diploma, credentials, etc.) from Private Attribute Providers (e.g., academics, corporate, association, etc.) are generally considered dubious even if delivered by formal or official means. They provide only a variable level of confidence, and are not bound to a master list or trust list. Many time the Private Attribute Provider is an unknown issuing authority from the viewpoint of a relying party. Such a private attestation, if delivered by the user alone to a relying party, would not be trustworthy, because the user could alter it, or it could be a forged copy. Thus, when a relying party requires a user to present a digital attestation issued by a Private Attribute Provider (e.g. academic institution), they would like to be certain that digital attestation belongs to the user presenting it, and have confirmed its authenticity by a trusted source.

Presently, organizations must access individual resources to review existing information specific to e-signatures, attestation, and authorship of user documents. Such types of proofing is a costly and time consuming exercise. And, especially those related to user identification, where privacy concerns of sharing user information and personal data are at issue. No common system holds all identity information for an individual user. And, there is no single overwhelmingly accepted standard, law, or regulation for device attestation of a user's identity.

Although, certain specifications (GP, ISO, ETSI, CEN/CENELEC, W3C, GSMA) promulgate abstract ideas for certifying and trusting digital user-identification documents they do not provide concrete implementations. To this point, ISO/IEC 18013-5 proposes standardized methods of interacting with a mobile ID (mID) and mobile driver's license (mDL) for identity and driving privilege use cases. An open mDL/mID ecosystem that conforms with the global interoperability standards provides a level of trust comparable to a traditional passport or user identification. Although the ISO/IEC 18013-5 draft international mDL standard seeks to provide mechanisms for obtaining and trusting identity document data from a mobile driver's license, the specifications are complex and silent on implementation specifics.

The problem with these standards proposals is that they do not provide implementations for endorsement of digital attestations from Private Attribute Providers. Such ID proofing is timely and costly; a Relying Party has generally too few benefits in checking complex credentials on its own. Moreover, Government or public authorities are reluctant to consent to providing more data than their insurance liability allows for when requested to confirm digital credentials.

The invention provides a solution that overcomes existing limitations and advantageously provides for closer involvement of Private Attribute Providers and Private Service Providers in a cryptographic ecosystem, where users are looking to enhance the trust in their private attestations, for example, by way of a connected device.

### SUMMARY

In a first embodiment, a method for non-repudiable endorsement of a private attestation is provided. The method includes the steps of receiving an Attestation from a Private Attribute Provider (PAP), wherein the Attestation includes attributes with corresponding attribute names and values, and an optional PAP signature signed by the PAP, and is further characterized by:
- binding a user of a connected device to the Attestation; and
- binding pivotal attributes to equivalent attributes of the Issuing Authority.

The two bindings above provide for stronger trust enhancements over the state of the art. The step of binding a user of a connected device to the Attestation includes collecting a set of user certified attribute names from said attributes selected by the user, authenticating the user to an Issuing Authority, generating a key pair for the user, comprising a public key (PuK) and a private key (PrK), and transmitting said public key (PuK) to said Issuing Authority. The step of binding pivotal attributes to equivalent attributes of the Issuing Authority includes requesting the Issuing Authority to authorize user and endorse said Attestation based on it, and validating said set of user certified attribute names. If validated, the method includes receiving from said Issuing Authority a signed Server Proof, aggregating the signed Server Proof with a Verifier Challenge to produce a Verifier Blob, signing the Verifier Blob with said private key (PrK) to produce a Mobile Signed Blob, packaging the Attestation with the Mobile Signed Blob to produce an Endorsed Attestation, and then presenting said Endorsed Attestation to said Verifier to access a service offered by said Verifier. For said step of binding pivotal attributes, the Issuing Authority performs steps of: checking a validity of said set of user certified attribute names against equivalent corresponding attribute values, and, if valid, endorsing said Attestation alongside said set of user certified attribute names and a hashed Attestation and a hashed Public key; and, returning said signed Server Proof; otherwise, if not valid, not endorsing said Attestation.

The step of endorsing includes signing the Server Proof to produce said signed Server Proof, said signed Server Proof comprising said hashed Attestation, a hash of said user certified attribute names, an Issuing Authority Challenge, and said hashed Public Key. The Endorsed Attestation comprises: said Attestation and said optional PAP signature; and said Mobile Signed Blob comprising: a connected device signature over said Verifier Blob using private key (PrK); and said Verifier Blob. The Verifier Blob comprises said Verifier Challenge; and said signed Server Proof. The signed server proof comprises said hashed Attestation, said hash of said user certified attribute names, said Issuing Authority Challenge, said hashed Public Key, and an Issuing Authority signature. The step of checking a validity includes authenticating said user certified attribute names to a civil registry, an identification documents registry, an administrative registry or any source of prior registered information for connected device authentication of a user of said connected device. The access to said service grants a right or privilege to a user of a device holding said device key.

The Attestation can further include a purpose for using said attributes that limits said access by said PAP, where the purpose in said Attestation contains terms of usage, an expiry date, or other conditional measure for using the Endorsed Attestation. Tterms of usage, an expiry date, or other conditional measure can be included in said Issuing Authority Challenge to limit use of the Endorsed Attestation by said Issuing Authority. Endorsing said Attestation alongside said set of user certified attribute names and a hashed Attestation and a hashed Public key binds the user to said key pair of the connected device, thereby preventing the user from denying the connected device signature.

In a second embodiment, a method for non-repudiable pre-endorsement of a private attestation by way of a connected device is provided. The method includes the steps of receiving an Attestation from a Private Attribute Provider (PAP), wherein the Attestation includes attributes, corresponding attribute names and values, and a PAP Challenge, and is further characterized by: 1) binding a user of the connected device to the Attestation, and 2) binding pivotal attributes to equivalent attributes of an Issuing Authority. The step of binding a user of the connected device to the Attestation includes collecting a set of user certified attribute names from said attributes selected by the user, authenticating the user to the Issuing Authority, generating a key pair for the user, comprising a public key (PuK) and a private key (PrK), and transmitting said public key (PuK) to said Issuing Authority. The step of binding pivotal attributes to equivalent attributes of an Issuing Authority includes requesting the Issuing Authority for its authorization to endorse said Attestation based on it, validating said set of user certified attribute names.

If validated, the method further includes receiving from said Issuing Authority a signed Server Proof, aggregating the signed Server Proof with the PAP Challenge to produce a pre-endorsed Blob, signing the pre-endorsed Blob with said private key to produce a Mobile Signed pre-endorsed Blob, and presenting said Mobile Signed pre-endorsed Blob to said PAP for authentication. If authentication is successful, the method includes receiving a PAP signed Attestation, and re-building an Endorsed Attestation with a Verifier Challenge. The step of re-building an Endorsed Attestation comprises aggregating the signed Server Proof with said Verifier Challenge to produce a Verifier Blob, signing the Verifier Blob with said private key (PrK) to produce a Mobile Signed Blob, packaging the PAP signed Attestation with the Mobile Signed Blob to produce an Endorsed Attestation; and presenting said Endorsed Attestation to said Verifier to access a service offered by said Verifier.

In a third embodiment, a system for non-repudiable endorsement of a private attestation is provided. The system includes an Issuing Authority, a Verifier; and a Private Attribute Provider (PAP) to provide an Attestation comprising attributes and corresponding attribute values. A connected device operated by a user is further characterized in that it binds the user to the Attestation, and binds pivotal attributes to equivalent attributes of said Issuing Authority. Responsive to said bindings, it aggregates a signed Server Proof received from said Issuing Authority with a Verifier Challenge from said Verifier to produce a Verifier Blob, signs the Verifier Blob to produce a Mobile Signed Blob, packages the Attestation with the Mobile Signed Blob to produce an Endorsed Attestation, and presents said Endorsed Attestation to said Verifier to access a service offered by said Verifier. The connected device binds the user to the Attestation by collecting a set of user certified attribute names, but not attribute values, from said attributes selected by the user, authenticating the user to the Issuing Authority, generating a key pair for the user, comprising a public key (PuK) and a private key (PrK), and transmitting said public key (PuK) to said Issuing Authority.

The connected device binds pivotal attributes to equivalent attributes of said Issuing Authority by requesting the Issuing Authority for its authorization to endorse said Attestation based on it validating said set of user certified attribute names, and if validated, receiving from said Issuing Authority said signed Server Proof. The Issuing Authority checks a validity of said set of user certified attribute names to its own corresponding attribute values, and if valid, endorses said Attestation alongside said set of user certified attribute names and a hashed Attestation and a hashed Public key; and returns said signed Server Proof; otherwise, if not valid, it does not endorse said Attestation. The Issuing Authority signs the Server Proof to produce said signed Server Proof, said signed Server Proof comprising said hashed Attestation, a hash of said user certified attribute names, an Issuing Authority Challenge, and said hashed Public Key.

In a fourth embodiment a connected device for non-repudiable endorsement of a private attestation is provided. The device includes a power supply to provide power; a memory to store instructions and data; a communication module to transmit and receive data; a display to present information and receive user input; and a processor to run a computer program. The computer program comprises a non-transitory computer readable medium storing program code to be executed by at least one computer processing unit (CPU) in a computational environment, whereby execution of the program code causes the at least one CPU to perform operations of the methods above. In one arrangement the method includes receiving an Attestation from a Private Attribute Provider (PAP), wherein the Attestation includes attributes and corresponding attribute values; and, is further characterized by binding a user of the connected device to the Attestation, and binding pivotal attributes of said attributes to equivalent attributes of an Issuing Authority.

### BRIEF DESCRIPTION OF THE DRAWINGS

The features of the present invention, which are believed to be novel, are set forth with particularity in the appended claims. The invention, together with further objects and advantages thereof, may best be understood by reference to the following description, taken in conjunction with the accompanying drawings, in the several figures of which like reference numerals identify like elements, and in which:
**FIG. 1** depicts a use-case diagram for endorsing a private attestation in accordance with an embodiment;
**FIG. 2** is a method for non-repudiable endorsement of a private attestation in accordance with an embodiment;
**FIG. 3** is a diagrammatic illustration of an Endorsed Attestation produced by the method of FIG. 2 in accordance with an embodiment;
**FIG 4A** illustrates binding paths in the Endorsed Attestation of FIG. 3 in accordance with an embodiment;
**FIG 4B** illustrates binding points in the Endorsed Attestation of FIG. 3 in accordance with an embodiment;
**FIG. 5** is a method of re-using a signed Server Proof in the Endorsed Attestation in accordance with an embodiment;
**FIG. 6** is a method for non-repudiable pre-endorsement of a private attestation in accordance with an embodiment;
**FIG. 7** depicts an exemplary diagrammatic representation of a machine suitable for use to perform the methods in accordance with an embodiment; and
**FIG 8** illustrates a hardware platform suitable for use to perform the methods in accordance with an embodiment.

### DETAILED DESCRIPTION

While the specification concludes with claims defining the features of the invention that are regarded as novel, it is believed that the invention will be better understood from a consideration of the following description in conjunction with the drawing figures, in which like reference numerals are carried forward.

In computing, an attribute is a specification that defines a property of an object, element, or file. It may also refer to or set the specific value for a given instance of such. In many object-oriented languages, certain attributes can also be declared as private, making it difficult, if no impossible, for users of a class to directly view or modify their values. The developer of the class then provides methods to control the ways in which these attributes can be manipulated or used. The protocol herein described for endorsing a private attestation can be employed by the user to endorse a signed attestation with attributes of his or her choice. It can also be requested by Private Attribute Providers before they apply their signature onto an attestation.

There is a need to endorse attributes from Private Attribute Provider(s) with two strong enhancements: 1) binding with the holder, and 2) binding with certified pivotal attributes from an Issuing Authority. Identification proofing is costly and a Relying Party placed in such a positon receives little benefit from checking complex credentials on its own. Moreover, when a third party such as a government public authority, is included as a trusted source to assist with the proofing, the contractual liability generally presents a challenge; it is difficult to obtain consent and delivery of data responsive to a request for endorsement of digital credentials. The embodiments herein provides a solution that overcomes these limitations.

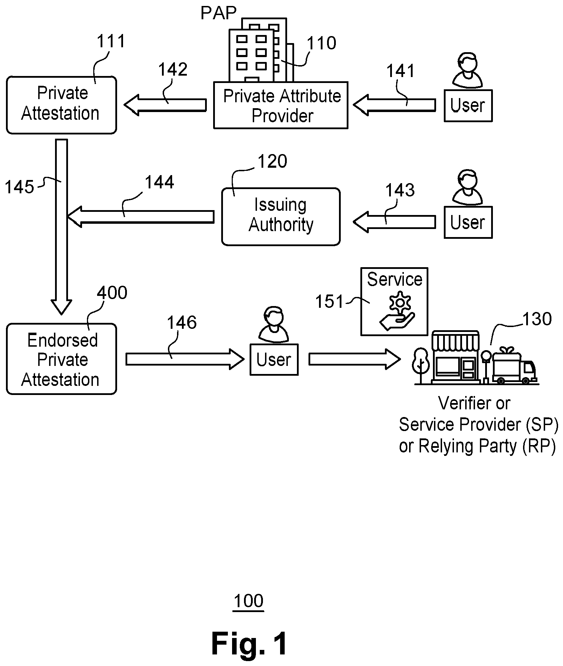

Referring **to** **FIG. 1**, a high-level use-case diagram for endorsing a private attestation is illustrated in accordance with a first embodiment. In this use-case, a user ultimately wants to obtain a service 151 from a Service Provider 130. The Service Provider can also be considered a Verifier (130) or Relying Party. In order to receive the service 151, the Service Provider requires a private attestation 111 from a Private Attribute Provider (PAP) 110, and it must be assured that the attestation 111 is indeed trustworthy. To provide this assurance, the Issuing Authority 120 is included as a party to enhance the user's trust.

The Issuing Authority, by means described herein, endorse the private attestation to produce an endorsed private attestation. The endorsement assures the Service Provider that the private attestation 111 is authentic and trustworthy. The user then presents endorsed private attestation to the Service Provider 130 as a condition to receive the service 151. Access to the service 151 grants a right or privilege to a user of a mobile device holding a device key.

The use-case diagram 100 exemplifies a general high-level method (steps 141-146) for non-repudiable endorsement of private attestations, as a solution for users to strengthen the level of confidence in user's private attestations before delivery to a Service Provider 130 (or Relying Party). It introduces the Issuing Authority 120 to the user and the service provider as a trusted source and intermediary for the endorsement. In this use-case, the Service Provider 130 asks the user for digital attestation issued by the Private Attribute Provider and receives assurance by way of the endorsed attestation from the Issuing Authority, that the digital document it received belongs to the user and that main (pivotal) user ID attributes featured by the attestation were verified and validated.

For example, consider that the user is a former student that graduated from an academic institution (e.g. PAP 110) and seeks a privilege from an alumni association (e.g. Service Provider 130). The user obtains a digital diploma document with associated user-identifying information from the PAP 110, which granted the degree to the user, and where the degree states the user's name, graduation date, granting institution, and discipline area. In this example, the Service Provider 130 is the alumni association that can grant a privilege (e.g. service 151) to the user but requires the user to have attended and received a diploma from the institution in order to receive service, or the privileges; that is, conditions to the service. The Service Provider 130 could also be a 3^{rd} party Verifier working on behalf of the alumni association to authorize users. Although the user could have a copy of the diploma, or even a picture of the diploma (actual, or on a mobile device) to present to the alumni association as proof, it would impose a time and cost effort on the association (or 3^{rd} party affiliate) to confirm the authenticity of the diploma (copy or picture). It would be preferable if the diploma was received directly from the degree granting institution because it is a more trustworthy source than the user alone. But again, this imposes a burden on both the PAP (e.g. academic institution) and the Service Provider (e.g., alumni association) to communicate and establish a basis of trust.

In this example, at step **141** the user requests a user-identifying digital document, to which the PAP 110 responds at step **142** with a private attestation 111; namely, proof that the digital document it provided is indeed true and authentic. It attests to the private information in the digital document. The user at this point could then present the private attestation. Another configuration of the use-case 100 discussed ahead, provides a solution for Private Attribute Providers (PAP) to require pre-endorsement to reduce risk of 'wrong deliveries' of attestations.

However, as previously mentioned, there is a need to endorse the attestation from a reliable source other than the user. An endorsement is an approval, similar to a digital certificate to prove authenticity of something. To provide this assurance, the user at step **143** authenticates to the Issuing Authority 120, and upon authentication, selects pivotal attributes (e.g. first name, last name, birth date, place of birth) in the private attestation 111 for the Issuing Authority 120 for it to independently validate against. The Issuing Authority at step **144**, upon validating the pivotal attributes, responds with Server Proof; namely, that the private attestation corresponds to the user. At step **145**, the Server Proof is combined with the Private Attestation to produce the endorsed private attestation 400. At step **146**, the user presents the endorsed private attestation to the Service Provider 130 to receive the service 151.

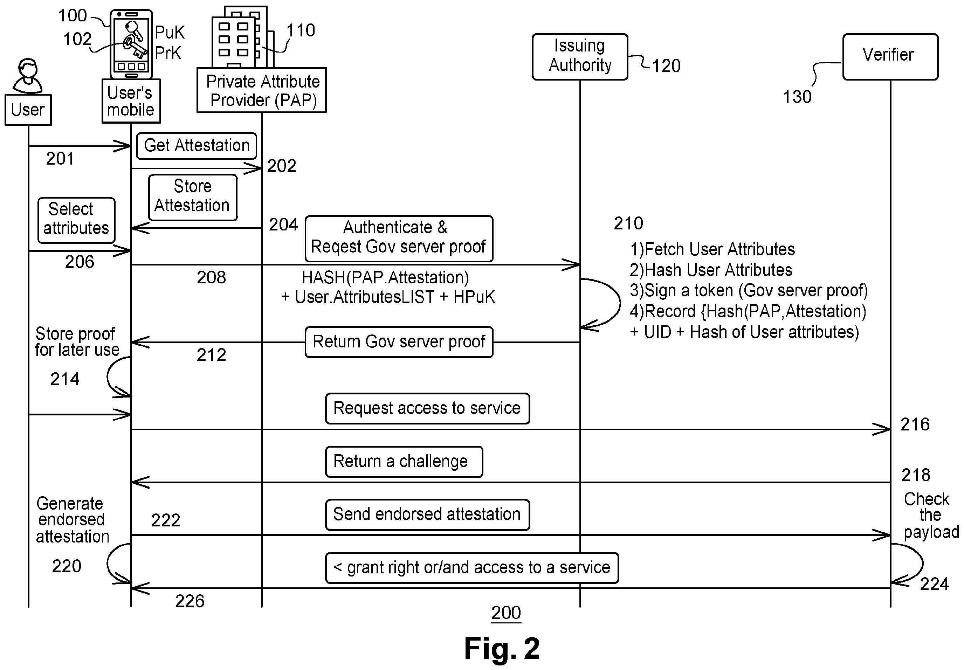

Referring to **FIG. 2** a method **200** for non-repudiable endorsement of a private attestation by way of a mobile device is shown. The method can include more or less than the number of steps shown and is not limited to the order of steps shown. When discussing the method, reference will be made to other figures for showing enabling components. The method is shown in the context of a computational ecosystem wherein a user with a connected device 100 requests a service provided by Verifier 130. The connected device may be a mobile phone, laptop, or other electronic communication equipment.

The method **200** can start at step **201**, wherein a user requests from their connected device 100, an (private) attestation from the PAP 110. The user collects the attestation from the PAP. In this example, the attestation asserts a graduation granted to Mr John Smith born on Oct 23rd 1980 in Utopia. The PAP controls the ways in which the private attributes can be attested. For instance, an academic institution is a PAP that can attest a particular degree was granted to a particular student on a particular date. A corporation that provides user identification badges (IDs) is another example of a PAP that can attest that a particular badge was given to a particular employee for entry into certain areas, or access to certain computer systems, for a certain time period. An association that provides acess to services to registered users is another example of a PAP that can provide attestation services.

At step **202**, the PAP responds with the attestation, and the connected device 100 then stores the attestation. The Attestation includes attributes with corresponding attribute values. In the example user-case of FIG. 1, an exemplary list of attribute names and values is shown below.

| Attribute Name | Attribute Value |
|---|---|
| First Name | John |
| Last Name | Smith |
| Birth Date | October 23, 1980 |
| Place of birth | Utopia |
| Degree | Bachelor |

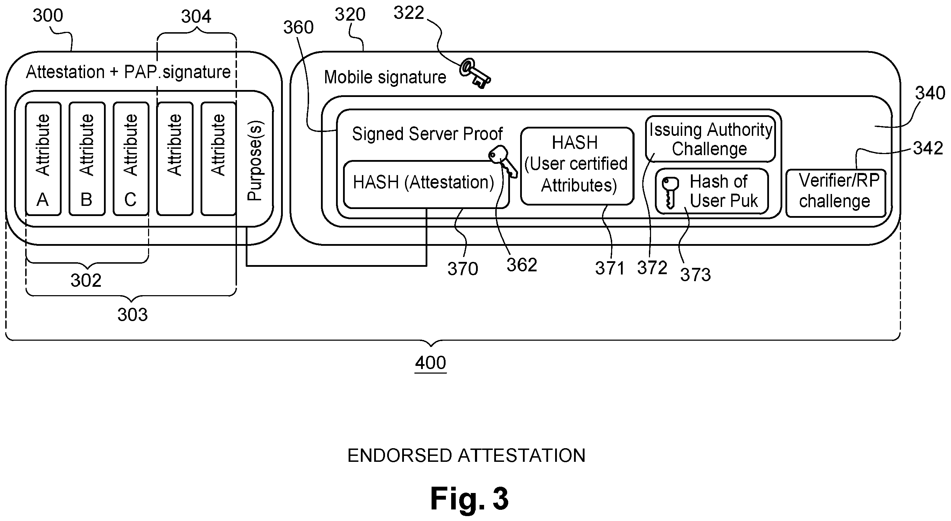

At step **206**, the mobile device presents to the user a list of attribute names in the Attestation and prompts the user to select a subset of attribute names, but not values, to preserve privacy. This is the set of user certified attribute names; also, considered "pivotal" attributes. Briefly referring to FIG. 3, the the pivotal attributes **302** selected by the user are identified and marked (e.g., A, B, C) in the Attestation 300, which includes all the attributes. Notably, attribute values may be included with the corresponding attribute names in the Attestation 300, but, the method by which the endorsed attestation 400 is produced relies only on the (user certified) attribute names selected by the user; it does not require attribute values. This step permits the user to endorse the attestation by binding its comprised attributes (Attribute Name and Value pairs) to equivalent attributes (Attribute Name and Value pairs) from a variable source (eg., user input, elDCard, Cloud service, Govservice etc.). The user is prompted to select the attribute names (not the attribute value) as the pivotal attributes he or she wants to use for their endorsement of the attestation (e.g., first name, last name, birthdate, place of birth).

At step **208**, the user then authenticates to the Issuing Authority 120 by way of their connected device 100. From his or her mobile, the user authenticates to an Issuing Authority 120, for example, a Government Server (e.g. login/pass or additional authentication vector or elDCard, or OOB pre-acquired secret etc.). During this step, with their mobile, the user generates a key pair <User Public Key (PuK) and User Private Key (PrK)> and sends a request to the Government Server for an authorization to endorse the attestation alongside the set of pivotal attribute names {e.g., first_name, last_name, birthdate, place_of_birth}, a hash of the attestation (attestation not revealed in clear for privacyreasons) and a hash of user public key (HPuK). The step of endorsing the Attestation alongside the set of user certified attribute names and a hashed Attestation and a hashed Public key binds the user to the generated key pair of the mobile device, thereby preventing the user from denying his or her endorsement (and mobile device signature) of the attestation.

At step **210**, the Issuing Authority 120 1) fetches User Attributes, 2) Hashes the User Attributes, 3) signs a token as server proof, and 4) records a {Hash(PAP.Attestation) + UID + Hash of Use Attributes}. Specifically, the Issuing Authority 120 independently validates the pivotal attribute names, and it does so against attribute values it has already from the authorization of the user, or finds through its own search of trusted sources. Validating pivotal attributes to equivalent attributes of the Issuing Authority is a proofing exercise. It is one component of the server proof. Once the Issuing Server 120 obtains its own independent attribute values for the selected pivotal attribute names, it will examine the attestation to ensure corresponding attribute name and value pairs are consistent; namely, that the attribute values for the names in the attestation are correct in view of its own investigation/search. For example, the Government Server checks the validity of the attributes in the Attestation for the authenticated user to see that the attribute name/value pairs match against attribute name/value pairs from within a Civil Registry, Identification documents Registry, Administrative Registry, etc.

At step **212**, the Issuing Authority 120 returns signed Server Proof if the resulting matching exercise from its investigation was successful. For example, a government server will return a signed Gov server proof if the checking is successful; the proof comprising the hash of the attributes, a challenge (or unique identifier UID) and the hashed attestation. At step **214**, the mobile device stores the signed Server Proof for later use. At this point the user has the Server Proof it will need to satisfy a Verifier request for user identification. It can terminate communication with the Issuing Authority 120. The user now proceeds to communicate with the Verifier 130.

At step **216**, the user requests access to a service provided by the Verifier (or Source Provider or Relying Party). In the continuing example, the service could be an alumni privilege for those students who went to a particular academic institution. The user logs into the Verifier service with his mobile device, and requests service. The Verifier 130 responds with a Verifier Challenge at step **218** which is provided to the user's mobile device. At this point, the user will prompt its mobile device to generate an endorsed attestation as shown by step **220**. The connected device 100 under the user's direction aggregates the Gov server proof with the Verifier challenge from the Verifier/SP/RP, then signs the entire package (with his device key - User Private Key, PrK), thereby generating an endorsed attestation. A detailed description of an exemplary endorsed attestation 400 is shown and provided in **FIG 3**.

Upon the mobile device generating the endorsed attestation 400, the user sends it to the Verifier 130 at step **222**. That is, the user delivers the endorsed attestation to the Verifier/SP/RP to access a service or be granted a right, etc., for example, alumni webpage access rights. The Verifier 130 checks the payload of the endorsed attestation 400 (see **FIG 3**) to determine if the user supplied attestation accords with the the server proof. From this it will extract the attribute names/values it requires from the attestation to decide and provision services for the user. The Verifier will perform the customary PKI actions necessary to confirm key use and certificates.

Referring to **FIG. 3**, a diagrammatic illustration of the Endorsed Attestation **400** is shown. The Endorsed Attestation **400** comprises an Attestation **300** and a Mobile Signed Blob **320**. A certain selection of the attributes **303** are considered pivotal attributes **302** (e.g., A, B, C; also referred to as user certified attribute names). These are "pivotal" in the sense that the user selects certain attribute names (but not values) from within the Attestation for the Issuing Authority to independently validate against. The Endorsed Attestation **400** comprises the Attestation 300 with its optional PAP signature 304 and the Mobile Signed Blob 320. Note, the PAP signature is optional; It is not a required element of an endorsed attestation. Rather, endorsement of the attentation refers to the combined presentation (combination) of the Attestation 300 with the Mobile Signed Blob **320**, regardless if the PAP signature is present.

The Attestation **300** includes a purpose for using each attribute, for example, terms of usage, an expiry date, or other conditional measure for using the Endorsed Attestation **400**. The purpose may be provided by the PAP 110 or the User. The Attestation **300** includes a signature **304** confirming it was signed by the PAP. But, it is optional in that the PAP signature **304** accompanies the Attestation **400** if deemed a pre-requisite to the Issuing Authority endorsing the attestation **300**.

The Mobile Signed Blob **320** comprises a Verifier Blob **340** and a mobile signature **322** (shown as a key). The mobile signature **322** is created by the connected device 100 (See FIG. 2 and FIG 3B) when it uses its stored User Private Key (PrK) to sign the Verifier Blob **340**. The Verifier Blob **340** comprises the signed Server Proof **360** and the Verifier Challenge **342**. The signed Server Proof **360** comprises the Server Proof provided by the Issuing Authority **120** along with an Issuing Authority signature **362** (shown as a key) to confirm that it was signed by the Issuing Authority **120**. The Server Proof **360** comprises a hash (hashed Attestation **370**) of the Attestation **300**, a hash (hashed user certified attributes **371**) of the user certified attribute names, an Issuing Authority Challenge **372**, and a hash (hashed User Public Key **373**) of the User Public Key (PuK). The User Private Key (PrK) and the User Public Key (PuK) are a corresponding key pair created by the User on their connected device 100 and stored thereon. The keypair is generated in accordance with Public Key Infrastructure (PKI) guidelines and recommendations. Accordingly, the signed Server Proof **360** comprises the Server Proof (elements **370-373**) and the Issuing Authority signature **362**.

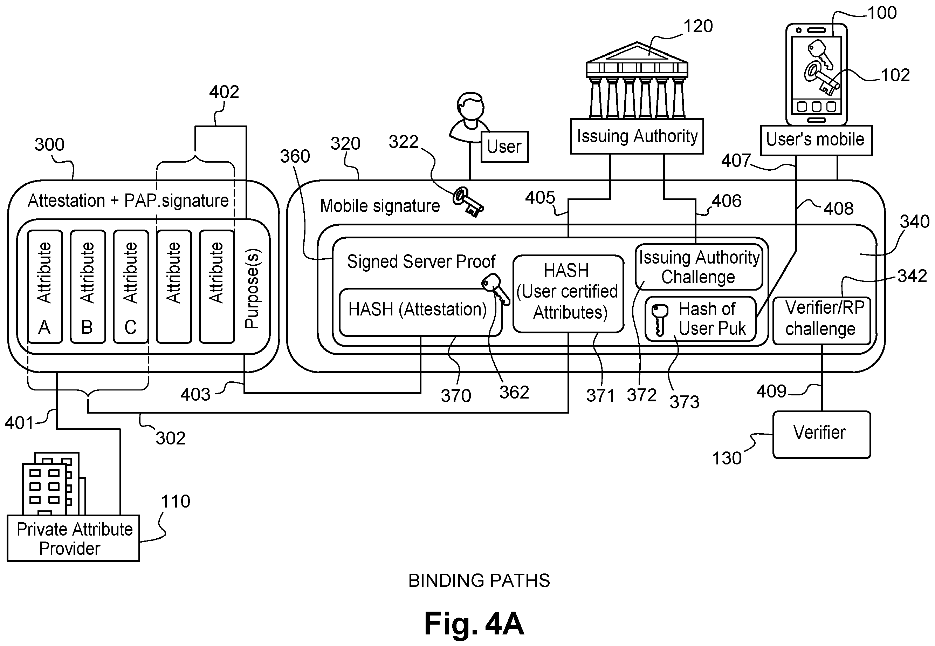

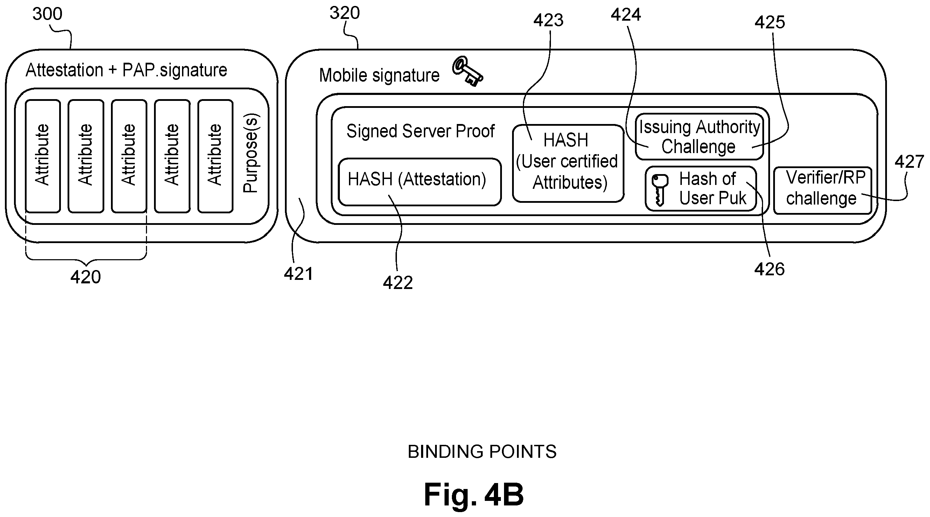

Briefly, **FIG 4A** and **FIG 4B** respectively illustrate binding paths and binding points of the various entities involved in endorsing the Attestation provided by, and resulting from, the method 200 of FIG. 2 for creating the Endorsed Attestation 400 (see FIG 3). The binding points are the result of the creation of a corresponding non-repudiation binding path whereby the user or the engaged entity (Issuing Authority or Verifier) cannot deny the validity of assembled/packaged components of the Endorsed Attestation 400 (FIG. 3). The binding points and paths also establish how components can be re-used. For example, once endorsed, the user can reuse the signed Server Proof when seeking service from different Verifiers. However, the user can reuse the signed Server Proof only with the same Attestation.

Referring now to **FIG 4A**, binding paths of the various entities involved in endorsing the Attestation are presented. Binding path **401** arises between the PAP 110 and the Attestation 300 when the PAP 110 produces and signs the Attestation thereby producing the PAP signature 362 (FIG 3A). Binding path **402** occurs when the PAP 101 includes one or more purposes for using the pivotal attributes 302 and signs the attestation. The binding path **403** occurs when the Issuing Authority 120--having included the hashed Attestation 370--signs the Server Proof with it's Issuing Authority signature 362. The binding path **404** occurs when the Issuing Authority 120-- having including the hashed user certified attribute names 371--signs the Server Proof with it's Issuing Authority signature 362. It binds the pivotal attributes selected by the user (user certified attribute names 302; e.g., A, B and C) to equivalent attributes validated by the Issuing Authority. The binding path **405** occurs when the Issuing Authority 120 signs the Server Proof with it's Issuing Authority signature 362 in producing the signed Server Proof 360. The binding path **406** occurs because the Issuing Authority 120 includes an Issuing Authority Challenge 372 within the signed Server Proof 360.

Bindings **407-408** bind the user of the connected device 100 to the Attestation 300, thereby creating a non-repudiation path whereby the user can not deny it selected the pivotal attributes used by the Issuing Authority to endorse the Attestation requested by the user, or deny that it did not create the Verifier Blob 340 for requesting a service from the Verifier 130. The binding path **407** occurs when the user's mobile device signs the Verifier Blob 340 with the User's Private Key (PrK) to produce the Mobile Signed Blob 320. The binding path **408** occurs when the user provides to the Issuing Authority its User's Public Key (PuK) and requests authentication and endorsement to the Attestation 300. The binding 388 is not repudiable because the hashed User Public Key (PuK) 373 is embedded within the signed Server Proof 360. Binding path **409** binds the user to a Verifier 130 when mobile device builds the Endorsed Attestation 400 specific to a challenge provided by the Verifier (or Source Provider, or Relying Party).

Referring now to **FIG 4B**, binding points of the various entities involved in the creation of the Endorsed Attestation 400 are presented. Numeric reference will also be made to components previously shown in FIG. 4B. The binding point **420** establishes that only pivotal attributes (user certified attribute names 302; FIG. 3) can be endorsed by the Issuing Authority. The binding point **421** connects the attestation 300 to the mobile device, and establishes the user commitment. It is a user commitment, because at this point, the Issuing Authority endorsed the Attestation per the user's request, and that Attestation includes the pivotal attributes 302 selected by the user. The binding point **422** establishes that the user cannot deny that he or she willingly endorsed the Attestation. The binding point **423** establishes that the user cannot deny his or her choice of pivotal attribute involved in the endorsement.

The binding point **424** commits the user to replay the Server Proof only for the same Attestation. Point **425** binds the user to the authorization from the Issuing Server. This binding, similar to the purposes field in the attestion, can comprise properties or terms of usage established by the Issuing Authority: an expiry date or other conditions for using the Server Proof. Binding point **426** binds the user to the User Private Key (PrK) created and stored on the mobile device by the user. Accordingly, the user cannot deny the signature, because the signed Server Proof includes a copy of the corresponding User Public Key (PuK).

The binding point **427** establishes a uniqueness to the selected Verifier and binds the Endorsed Attestation to that particular Verifier. Because the inclusion of the Verifier Challenge 342 within the Verifier Blob 340 is under the control of the user and their connected device 100, the user can thus create other Endorsed Attestations specific to other Verifiers; namely by embedding their Verifier Challenge 342 into the Verifier Blob 340 and signing the package with the User Private Key (PrK) of the mobile device thereby producing a Mobile Signed Blob 320 specific to a Verifier. This configuration ability to include a Verifier Challenge 342 in the Mobile Signed Blob is what allows for an "endorse once and use many" approach. Although the user can reuse the signed Server Proof, the can do some only by using the same Attestation.

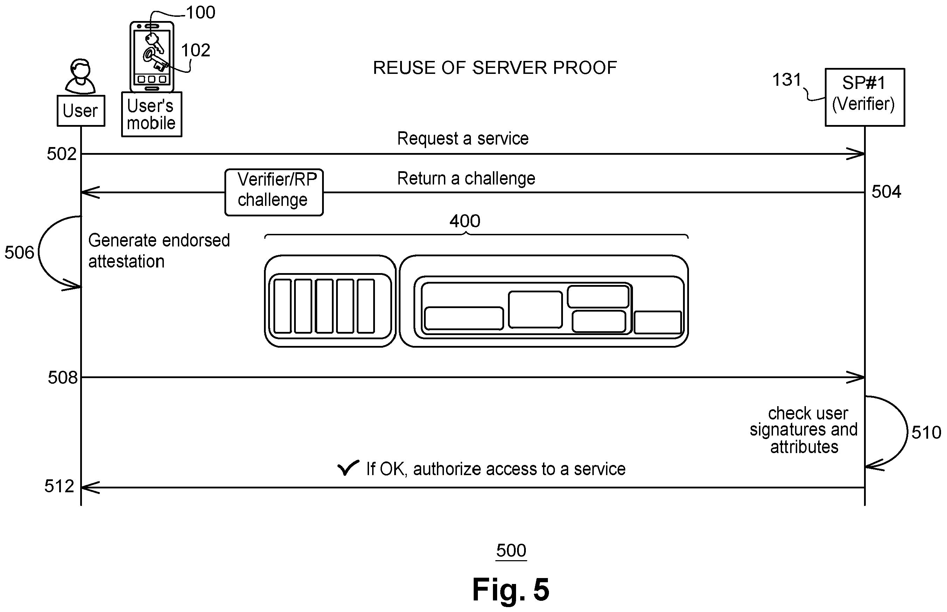

Referring to **FIG. 5**, a method **500** of re-using the signed Server Proof with a different Verifier for subscription to another service or privilege is shown. In this method, the user has already received the signed Server Proof, for example, in accordance with method steps 201-214 of **FIG. 2**. As seen in that figure, at step 214, the signed Server Proof is stored for later use, for example, as in this case, where the user desires a service from a different Verifier.

In method 500, at step **502** the user requests a service from Verifier 130. At step 504 the Verifier 130 returns with a Verifier Challenge. At step **506**, the user, by way of the connected device 100, generates an endorsed attestation 400 in a manner similar to the steps and explanation shown in **FIG 2**. Here however, the mobile device embedds the new (different) Verifier Challenge into the Verifier Blob 340, and then signs this blob with the User Private Key (PrK) 102 stored on the connected device 100. The procedure in method 500 is similar to that of method 200 but includes a different Verifier Challenge.

At step **508** the user presents the endorsed attestation to the Verifier 130. The Verifier at step **510** checks the package for its contents and correctness (checks user signatures and attributes) and decides what service to offer at step **512**, at which time it OK's and authorizes access to the service; namely, after ensuring the provided Attestation matches the Server Proof. This allows the user to reuse the same Server Proof from the Government Server with several different Verifiers (Service Providers or Relying Parties). Notably, only the Verifier/RP's challenge binds the user to a Verifier/RP. Accordingly, the Government Server proof can be reused with several Verifiers/RP provided its terms of usage authorize it.

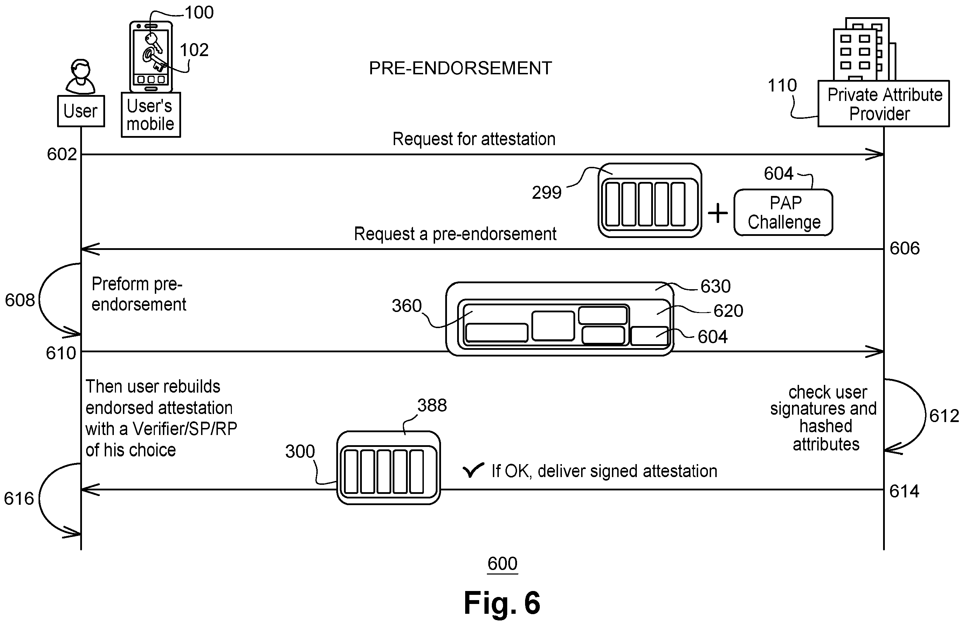

Referring to **FIG. 6**, a method **600** for non-repudiable pre-endorsement of a private attestation by way of a mobile device is provided. The method 600 can include more or less than the number of steps shown and is not limited to the order of steps shown. When discussing the method, reference will be made to other figures for showing enabling components. The method is shown in the context of a computational ecosystem wherein a user with a connected device 100 requests an attestation provided by PAP 110. Here, the user is supplementing method steps 201-204 of **FIG. 2** for receiving the digital attestation, as related to the communication of information provided to the PAP 110. This use-case occurs when the PAP is unsure about the legitimacy of the user request for the attestation and wants assurance in the form of a pre-endorsement by the Issuing Authority, before it releases the attestation to the user. In short, this requires the user to first seek out the signed Server Proof and provide that back to the PAP 110 as a condition for receiving the attestation. This is needed because the PAP 110 doesn't have easy means to authenticate users (requesters), and wants to avoid delivering attestations to fraudsters. Accordingly, PAP 110 demands reliance on the Issuing Authoritry as a condition to releasing an attestation.

At step **602**, the user submits a request for the attestation (e.g. diploma) to the PAP 110. It receives the Attestation from a Private Attribute Provider (PAP), wherein the Attestation includes attributes, corresponding attribute values, and a PAP Challenge **604**. At step **606** the PAP 110 however requests a pre-endorsement before it will add its signature 388 to the attestation. Notably, the unsigned attestation 299 returned by the PAP 110 at step 606 does not include a signature. Rather, it includes a PAP challenge **604** as a signaling for a pre-endorsement. So, the user cannot proceed to use the attestation **299** as was done in method **200**, because the PAP signature is absent at this step **606**. Note, it is a "non-signed" attestation at this point.

As was done in method 200, the method 600 here similarly includes binding a user of the mobile device to the Attestation. Thus, similarly, the user must first select a set of user certified attribute names (the pivotal attributes), but not attribute values, from the attributes identified in the unsigned attestation 299. The user authenticates to the Issuing Authority 120 (see FIG 2), generates a key pair for the user, comprising a public key (PuK) and a private key (PrK), and transmits the public key (PuK) to the Issuing Authority. The Issuing Authority then binds the pivotal attributes to equivalent attributes of the Issuing Authority. The user, by way of the mobile device, requests the Issuing Authority for its authorization to endorse the unsigned Attestation 299 (still lacking a PAP signature) based on it validating the set of user certified attribute names (pivotal attributes), and if validated, receives from the Issuing Authority a signed Server Proof. This is part of step **608** (perform pre-endorsement), and which includes the mobile device aggregating the signed Server Proof with the PAP Challenge to produce a pre-endorsed Blob; signing the pre-endorsed Blob with the private key (PrK) 102 to produce a Mobile Signed pre-endorsed Blob, and presenting the Mobile Signed pre-endorsed Blob to the PAP for authentication at step **610**. Note the hash (Attestation) is of a "non-signed" attestation here.

At step **612**, the PAP authenticates the pre-endorsed data package, by checking the signatures and hashed attributes of the Mobile Signed pre-endorsed Blob (similar to the endorsed attestation 400 but indues a PAP challenge 604 instead of a Verifier Challenge 342). If authenticated, the PAP sends at step **614** a PAP signed Attestation that includes the PAP signature **388**, and that is received by the connected device 100. Note, the attestation is now "signed". At this juncture the attestation 300 is the same form of that in method 200 in FIG. 2, where the PAP optionally signs the attestation, because it now includes the PAP signature **388**. At step **616**, the mobile device re-builds an Endorsed Attestation with a Verifier Challenge of its choice as explained/illustrated by method 500 in FIG. 5; namely, reuse of server proof. The re-building an Endorsed Attestation comprises aggregating the signed Server Proof with said Verifier Challenge to produce a Verifier Blob **620**, signing the Verifier Blob with the private key (PrK) to produce a Mobile Signed Blob **630**, packaging the PAP signed Attestation with the Mobile Signed Blob to produce an Endorsed Attestation, and presenting the Endorsed Attestation to the Verifier to access the service offered by the Verifier.

Advantages provided by the embodiments herein, include, but are not limited to: For the users:
- Easy to use attestations and simplified steps towards RP (no ID proofing process)
- Privacy-enabling endorsement to valorize private attestations with reference attributes (see **FIGS 1** **&** **2**)
- Possibility to use reference attributes from a variety of sources (eIDCard, Cloud, direct input, etc.)
- Possibility to reuse the same Gov server proof with several Verifiers/RP (See **FIG 5**)
For the Verifiers/SP/RP:
- No costly ID proofing (spare the cost of ID verificationto RP)
- Strong non-repudiation quality of the attestation, enhanced level of confidence (see **FIG 4** **A/B**)
For the Private Attribute Providers:
- No risk of impersonation or transfer of attestation to unauthorized person
- Optional pre-endorsement to reduce risk of 'wrong deliveries' without real additional cost
- Can benefit from the invention by requesting pre-endorsement before to sign the attestation (see **FIG 6**)
For Issuing Authority (Government Server):
- Gov doesn't have access to the private attestation content (GDPR compliant) and isn't in a good position verify it anyways
- Gov doesn't release any attribute value (After user authentication, Gov just provides signature of hash of selected attributes and a way to bind it to a user and a document hash)
- The proof from Gov can optionally bring terms of usage and validity period (see **FIG 4B**)

### System

In one embodiment, a system for non-repudiable endorsement of a private attestation is provided. The system includes an Issuing Authority, a Verifier, a Private Attribute Provider (PAP), and a mobile device. The PAP provides an Attestation comprising attributes and corresponding attribute values. The mobile device operated by a user binds the user to the Attestation, and binds pivotal attributes to equivalent attributes of said Issuing Authority. Responsive to said bindings, the mobile device aggregates a signed Server Proof received from said Issuing Authority with a Verifier Challenge from said Verifier to produce a Verifier Blob, signs the Verifier Blob to produce a Mobile Signed Blob, packages the Attestation with the Mobile Signed Blob to produce an Endorsed Attestation, and presents said Endorsed Attestation to said Verifier to access a service offered by said Verifier.

The mobile device binds the user to the Attestation by collecting a set of user certified attribute names, but not attribute values, from said attributes selected by the user. It authenticates the user to the Issuing Authority, generates a key pair for the user, comprising a public key (PuK) and a private key (PrK), and transmits said public key (PuK) to said Issuing Authority. The mobile device binds pivotal attributes to equivalent attributes of said Issuing Authority by requesting the Issuing Authority for its authorization to endorse said Attestation based on it, and validating said set of user certified attribute names. If validated, it receives from said Issuing Authority said signed Server Proof.

The Issuing Authority checks a validity of said set of user certified attribute names to its own corresponding attribute values, and, if valid, endorses said Attestation alongside said set of user certified attribute names and a hashed Attestation and a hashed Public key. It returns said signed Server Proof; otherwise, if not valid, it does not endorse said Attestation. The Issuing Authority signs the Server Proof to produce said signed Server Proof, said signed Server Proof comprising said hashed Attestation, a hash of said user certified attribute names, an Issuing Authority Challenge, and said hashed Public Key.

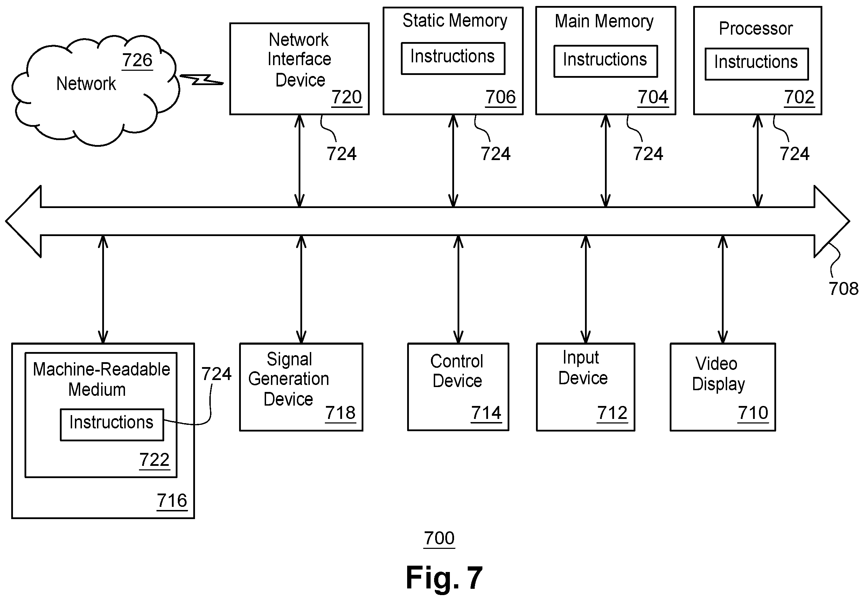

**FIG. 7** depicts an exemplary diagrammatic representation of a machine **700** in the form of a computer system 700 within which a set of instructions, when executed, may cause the machine to perform any one or more of the methodologies discussed above (e.g. by the PAP **110**, Issuing Authority **120**, or Service Provider **130**). In some embodiments, the machine operates as a standalone device, such as a computer, laptop, mobile device, remote control, or display. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 700 may include a processor 702 (e.g., a central processing unit (CPU), a graphics processing unit (GPU, or both), a main memory 704 and a static memory 706, which communicate with each other via a bus 708. The computer system 700 may further include a video display unit 710 (e.g., a liquid crystal display or LCD), a flat panel, a solid state display, or a cathode ray tube (CRT)). The computer system 700 may include an input device 712 (e.g., a keyboard, touchless sensing unit 110), a cursor control device 714 (e.g., a mouse, touchless sensing unit 110), a disk drive unit 716, a signal generation device 718 (e.g., a speaker or remote control) and a network interface device 720.

The disk drive unit 716 may include a machine-readable medium 722 on which is stored one or more sets of instructions (e.g., software 724) embodying any one or more of the methodologies or functions described herein, including those methods illustrated above. The instructions 724 may also reside, completely or at least partially, within the main memory 704, the static memory 706, and/or within the processor 702 during execution thereof by the computer system 700. The main memory 704 and the processor 702 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium 722 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

### Mobile Device (110)

In one embodiment, a mobile device for non-repudiable endorsement of a private attestation is provided. The device can include a power supply to provide power, a memory to store instructions and data, a communication module to transmit and receive data, a display to present information and receive user input; and a processor to run a computer program. The computer program comprises a non-transitory computer readable medium storing program code to be executed by at least one computer processing unit (CPU) in a computational environment, whereby execution of the program code causes the at least one CPU to perform operations comprising: receiving an Attestation from a Private Attribute Provider (PAP), wherein the Attestation that includes attributes and corresponding attribute values; binding a user of the mobile device to the Attestation; and binding pivotal attributes of said attributes to equivalent attributes of an Issuing Authority.

Binding a user includes collecting a set of user certified attribute names, but not attribute values, from said attributes selected by the user via said display, authenticating the user to the Issuing Authority, generating a key pair for the user, comprising a public key (PuK) and a private key (PrK) and storing in said memory, transmitting said public key (PuK) to said Issuing Authority via said communicaiton module, requesting the Issuing Authority for its authorization to endorse said Attestation based on it, and validating said set of user certified attribute names. If validated,
it includes receiving from said Issuing Authority a signed Server Proof; aggregating the signed Server Proof with a Verifier Challenge to produce a Verifier Blob; signing the Verifier Blob with said private key (PrK) to produce a mobile signed blob; packaging the Attestation with the mobile signed blob to produce an Endorsed Attestation; and presenting said Endorsed Attestation to a Verifier to access a service offered by said Verifier.

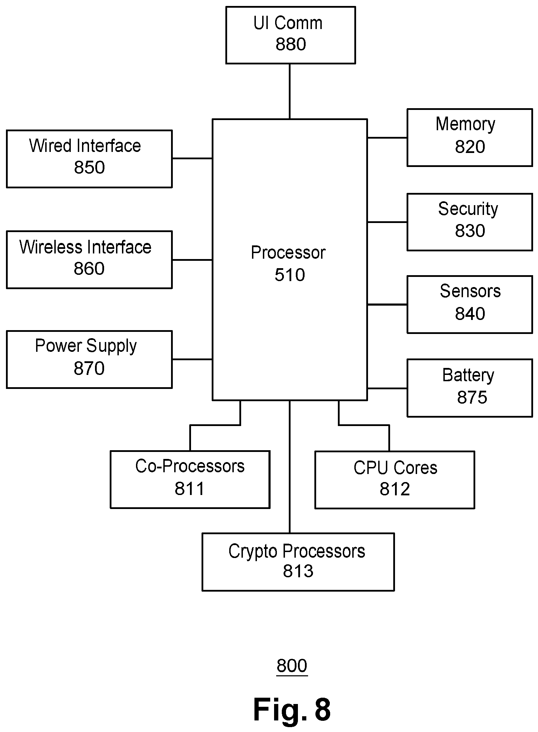

**FIG 8** illustrates a hardware platform **800** suitable for use as, or within, a computational processing environment for performing the aforementioned method steps of the Connected device 100. The platform 800 includes a processor 810, a memory 820, and a security 830, sensors 240, a communication module shown as wired interface 850 and/or a wireless interface, a power supply 870, a battery 875, and a User Interface (Ul) 880. These components may be communicatively coupled as shown or by direct hardware interfaces there between, including, but not limited to electronics, circuits, wires, lines, logic, or gates, where suitable.

The processor 810 may include one or more data processing circuits, such as a general purpose and/or special purpose processor, such as a microprocessor and/or digital signal processor (e.g., GPU, □P, ASIC, DSP, CPLD, IC, etc.). The processor 810 is configured to execute computer program code in the memory 820, described below as a non-transitory computer readable medium, to perform at least some of the operations described herein as being performed by an identified component, module or software block. The computer program code can include computer instructions, assembly code, firmware, or embedded code, machine code, that when executed by the processor 810 causes the processor 810 to perform operations in accordance with one or more embodiments disclosed herein.

Specific examples (a non-exhaustive list) of the computer readable storage medium exemplified by memory 820 can include the following: a hard disk, a random access memory (RAM), a read-only memory (ROM), an erasable programmable read-only memory (EPROM), Flash memory (NAND, NOR), a solid state device (SSD), an appropriate optical fiber (FICON) with a repeater, an optical storage device, a magnetic storage device, or any suitable combination of the foregoing.

The processor 810 may also be communicatively attached to a co-processor 811 (on-board or off board), one or more CPU cores 812 and one or more crypto processors 813 (e.g., HW crypto accelerator) that assist in off-loading computational or processing tasks.

The sensors 840 can detect or measure a physical property and record, indicate, or otherwise responds to the sensory information. The sensors 840 provide for measurement of temperature, humidity, radio frequency, electromagnetic, light, force, pressure, acceleration, movement, position, tilt, and other physical interaction and environmental conditions. The Sensors 840 may further include a signal comparator, a phase comparator, an analog to digital converter, amplifier, signal filter, etc. used to enable the processor 810 to receive and process signals from one or more sensors.

The security module 830 provides for monitoring of security violations, security risks, unauthorized uses and attacks on the platform 800. It may be a mixed signal low-power microcontroller that include decision logic, memory or software and that communicatively couples to the sensors 840 and the processor 810. The security module 830 may include software and logic, or share resources and responsibilities with the processor 810, to detect security events, such as tamper levels, thresholds, and conditions.

The platform 800 may include a wired network communication interface 850 and/or a wireless interface 860, for example, a radio access communication transceiver. The wired network interface can include standard computer networking interfaces used in local area networks (LAN), wide area networks (WAN), over the Cloud, and the Internet and other frame based or packed based networks. The Ethernet interface can use TCP/IP and UDP protocols for 10/100/1000Mbps transmission over standard Cat 5, Cat 5e, or Cat 6 cables. The radio access communication transceiver can include, but is not limited to, a LTE or other cellular transceiver, WLAN transceiver (IEEE 802.11), WiMAX transceiver, Bluetooth transceiver, NFC transceiver, Radio Frequency Identification (RFID) or other radio communication transceiver configured to communicate directly or indirectly (e.g., via a radio access node) with a network node.

The platform 800 may include User Interface (Ul) communication (COMM) modules 880, for example, electronic data exchange or generic communication, such as Universal Serial Bus (USB), RS-232 serial port, smart card reader, Graphical User Interfaces (GUI), Light Emitting Diodes (LED), or other user related I/O interfaces.

The power supply 870 provides power to the electronic components of platform 800 and can include regulators and converters to provide required voltage and current requirements. The battery 875 can also provide power, for example, in low-power modes or when otherwise required for security reasons, for example, to maintain the contents of protected memory.

### Further Definitions and Embodiments:

Consumers are increasingly using their mobile devices for a variety of applications for e-signatures, for instance, including securely storing and using credit cards for authorizing credit card transactions. The idea of using a mobile phone as an identity management device has been previously proposed. In such an arrangement, a key attestation process can rely on a service provider (SP) to perform a series of steps that result in an X.509 certificate chain that shows the provenance of the device back to an authority. But, since individual phones are not fully trusted, the industry needs a common, trusted approach. The protocol herein described for endorsing a private attestation can be a strong differentiator for attribute usage on mobile device. It can apply to various businesses: Mobile Wallet, CNIe, MultiAppvX, Mobile ID, e-ID, Mobile Wallet, ISO IEC 23220 on building blocks for mobile ID in ISO SC17 WG4 committee. CNIe is carte nationale idetentite electronique which is the French digital ID based on a card physical.

Device attestation allows organizations to learn about the security status of devices trying to connect to network apps and workspaces. The goal of attestation is to provide trustworthy evidence or proof about something. Identify attestation allows the device to provide proof of its hardware identifiers, such as serial number or IMEI. The concept of device attestation may similarly be applied to a user, or holder, of the device. In the case of a cybersecurity ecosystem, for example, this would suggest that a Relying Party (RP) like a bank or a cloud provider could be confident about the data they are receiving from the device, for example, a user document related to identification of the user presenting the device.

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Backend as a Service (BaaS) for connecting mobile apps to cloud based services, and Security as a Service (SECaas).

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

It is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

The flowchart and block diagrams in the figures illustrate the architecture, functionality, and operation of possible implementations of systems, methods, and computer program products according to various aspects of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

The corresponding structures, materials, acts, and equivalents of any means or step plus function elements in the claims below are intended to include any disclosed structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The aspects of the disclosure herein were chosen and described in order to best explain the principles of the disclosure and the practical application, and to enable others of ordinary skill in the art to understand the disclosure with various modifications as are suited to the particular use contemplated.

## Claims

1. A method (200) for non-repudiable endorsement of a private attestation, the method comprising:
receiving (202) an Attestation (111) from a Private Attribute Provider (PAP), wherein the Attestation includes attributes (303) with corresponding attribute names and values, and an optional PAP signature (304);
the method **characterized by**:
• binding (407) a user of a connected device (100) to the Attestation (111), by:
collecting a set of user certified attribute names (302) from said attributes (302) selected by the user,
authenticating the user to an Issuing Authority (120),
generating a key pair for the user, comprising a public key (PuK) and a private key (PrK) (102),
transmitting said public key (PuK) to said Issuing Authority (120); and
• binding (408) pivotal attributes (302) to equivalent attributes of the Issuing Authority, by:
requesting the Issuing Authority to authorize user and endorse said Attestation based on it
validating said set of user certified attribute names (302), and if validated,
receiving from said Issuing Authority a signed Server Proof (360).

2. The method of claim 1, further comprising:
aggregating the signed Server Proof (360) with a Verifier Challenge (342) to produce a Verifier Blob (340);
signing the Verifier Blob (340) with said private key (PrK) (102) to produce a Mobile Signed Blob;
packaging the Attestation (111) with the Mobile Signed Blob (320) to produce an Endorsed Attestation (400); and
presenting said Endorsed Attestation (400) to a Verifier (130) to access a service (151) offered by said Verifier.

3. The method of claim 1, wherein for said step of binding pivotal attributes, said Issuing Authority performs steps of:
checking (210) a validity of said set of user certified attribute names against equivalent corresponding attribute values, and
if valid, endorsing said Attestation alongside said set of user certified attribute names and a hashed Attestation and a hashed Public key; and
returning (212) said signed Server Proof; otherwise,
if not valid, not endorsing said Attestation,
wherein said endorsing includes signing the Server Proof to produce said signed Server Proof, said signed Server Proof comprising said hashed Attestation (370), a hash of said user certified attribute names (371), an Issuing Authority Challenge (372), and said hashed Public Key (373).

4. The method of claim 3, wherein said Endorsed Attestation (400) comprises:
said Attestation (300) and, optionally, said PAP signature (304); and
said Mobile Signed Blob (320) comprising:
a connected device signature over said Verifier Blob using private key (PrK); and said Verifier Blob (340) comprising:
said Verifier Challenge (372); and
said signed Server Proof (360) comprising:
said hashed Attestation (370),
said hash (373) of said user certified attribute names,
said Issuing Authority Challenge (342),
said hashed Public Key (373), and
an Issuing Authority signature (322),

5. The method of claim 4, wherein said step of endorsing said Attestation alongside said set of user certified attribute names and a hashed Attestation and a hashed Public key binds (407) the user to said key pair of the connected device, thereby preventing the user from denying the connected device signature.

6. The method of claim 2, wherein said step of checking (210) a validity includes authenticating said user certified attribute names to a civil registry, an identification documents registry, an administrative registry or any source of prior registered information for connected device authentication of a user of said connected device.

7. The method of claim 1, wherein the access to said service grants a right or privilege to a user of a device holding said device key, wherein said Attestation further includes a purpose for using said attributes that limits said access by said PAP, and said purpose in said Attestation contains terms of usage, an expiry date, or other conditional measure for using the Endorsed Attestation.

8. The method of claim 1, further comprising including terms of usage, an expiry date, or other conditional measure in said Issuing Authority Challenge to limit use of the Endorsed Attestation by said Issuing Authority.

9. A method (600) for non-repudiable pre-endorsement of a private attestation by way of a connected device (100), the method comprising:
receiving an unsigned Attestation (299) from a Private Attribute Provider (PAP) (110), the method further **characterized by**
wherein the Attestation includes attributes, corresponding attribute names and values, and a PAP Challenge (604);
• binding (602) a user of the connected device to the Attestation, by:
collecting a set of user certified attribute names from said attributes selected by the user,
authenticating the user to the Issuing Authority,
generating a key pair for the user, comprising a public key (PuK) and a private key (PrK),
transmitting said public key (PuK) to said Issuing Authority; and
• binding (608) pivotal attributes to equivalent attributes of an Issuing Authority, by:
requesting the Issuing Authority for its authorization to endorse said Attestation based on it
validating said set of user certified attribute names, and if validated,
receiving from said Issuing Authority a signed Server Proof;
aggregating the signed Server Proof with the PAP Challenge to produce a pre-endorsed Blob;
signing the pre-endorsed Blob with said private key to produce a Mobile Signed pre-endorsed Blob;
presenting (610) said Mobile Signed pre-endorsed Blob (630) to said PAP (110) for authentication; if authenticated (612),
receiving (614) a PAP signed (388) Attestation (300); and
re-building (616) an Endorsed Attestation (400) with a Verifier Challenge (342).

10. The method of claim 9, wherein the step of re-building an Endorsed Attestation comprises:
aggregating the signed Server Proof with said Verifier Challenge to produce a Verifier Blob (630);
signing the Verifier Blob with said private key (PrK) to produce a Mobile Signed Blob;
packaging the PAP signed Attestation (300) with the Mobile Signed Blob (630) to produce an Endorsed Attestation (400); and
presenting said Endorsed Attestation (400) to said Verifier (130) to access a service (151) offered by said Verifier.

11. A system for non-repudiable endorsement of a private attestation comprising:
an Issuing Authority (120);
a Verifier (130); and
a Private Attribute Provider (PAP) (110)
provides an Attestation (400) comprising attributes and corresponding attribute values; and
a connected device (100) operated by a user, wherein the connected device:
is further **characterized in that** it:
• binds the user to the Attestation,
• binds pivotal attributes to equivalent attributes of said Issuing Authority,
where responsive to said bindings,
aggregates a signed Server Proof received from said Issuing Authority with a Verifier Challenge from said Verifier to produce a Verifier Blob;
signs the Verifier Blob to produce a Mobile Signed Blob;
packages the Attestation with the Mobile Signed Blob to produce an Endorsed Attestation; and
presents said Endorsed Attestation to said Verifier to access a service offered by said Verifier.

12. The system of claim 11, wherein the connected device binds the user to the Attestation by:
collecting a set of user certified attribute names, but not attribute values, from said attributes selected by the user,
authenticating the user to the Issuing Authority,
generating a key pair for the user, comprising a public key (PuK) and a private key (PrK), and
transmitting said public key (PuK) to said Issuing Authority.

13. The system of claim 12, wherein the connected device binds pivotal attributes to equivalent attributes of said Issuing Authority by:
requesting the Issuing Authority for its authorization to endorse said Attestation based on it
validating said set of user certified attribute names, and if validated,
receiving from said Issuing Authority said signed Server Proof.

14. The system of claim 13, wherein said Issuing Authority:
checks a validity of said set of user certified attribute names to its own corresponding attribute values, and
if valid, endorses said Attestation alongside said set of user certified attribute names and a hashed Attestation and a hashed Public key; and
returns said signed Server Proof; otherwise,
if not valid, not endorsing said Attestation,
wherein said Issuing Authority signs the Server Proof to produce said signed Server Proof, said signed Server Proof comprising said hashed Attestation, a hash of said user certified attribute names, an Issuing Authority Challenge, and said hashed Public Key.

15. A connected device (100) for non-repudiable endorsement of a private attestation comprising:
a power supply (870) to provide power;
a memory (820) to store instructions and data;
a communication module (850) to transmit and receive data;
a display (880) to present information and receive user input; and
a processor (810) to run a computer program;
said computer program comprising a non-transitory computer readable medium storing program code to be executed by at least one computer processing unit (CPU) in a computational environment, whereby execution of the program code causes the at least one CPU to perform operations comprising:
receiving an Attestation from a Private Attribute Provider (PAP), wherein the Attestation includes attributes and corresponding attribute values;
and, is further **characterized by**:
• binding a user of the connected device to the Attestation, by:
collecting a set of user certified attribute names, but not attribute values, from said attributes selected by the user via said display,
authenticating the user to the Issuing Authority,
generating a key pair for the user, comprising a public key (PuK) and a private key (PrK) and storing in said memory,
transmitting said public key (PuK) to said Issuing Authority via said communicaiton module; and
• binding pivotal attributes of said attributes to equivalent attributes of an Issuing Authority, by:
requesting the Issuing Authority for its authorization to endorse said Attestation based on it,
validating said set of user certified attribute names, and if validated,
receiving from said Issuing Authority a signed Server Proof;
aggregating the signed Server Proof with a Verifier Challenge to produce a Verifier Blob;
signing the Verifier Blob with said private key (PrK) to produce a mobile signed blob;
packaging the Attestation with the mobile signed blob to produce an Endorsed Attestation; and
presenting said Endorsed Attestation to a Verifier to access a service offered by said Verifier.
